# EUROPEAN PATENT APPLICATION

(11) **EP 4 618 120 A1**
(43) Date of publication of application: **17.09.2025**
(21) Application number: 24172402.0
(22) Date of filing: 25.04.2024
(51) Int. Cl.: H01G 4/12, H01G 4/232, H01G 4/30, H01G 4/008, H01G 4/012

(54) **MULTI-LAYER CERAMIC CAPACITOR**

(30) Priority: 15.03.2024 US 202418605891
(71) Applicant: Yageo Corporation, Kaohsiung City 811 (TW)
(72) Inventor: FUJIMOTO, Masayuki, 831 Kaohsiung City (TW); WU, Ming-Chun, 831 Kaohsiung City (TW)
(74) Representative: Ström & Gulliksson AB

(57) **Abstract**

A multi-layer ceramic capacitor includes a multi-layer ceramic brick, and first and second terminal electrodes. The multi-layer ceramic brick has first and second end surfaces, which are opposite to each other. The multi-layer ceramic brick includes dielectric layers and internal electrode layers. The dielectric layers include perovskite oxides, which include barium and titanium. The internal electrode layers are alternately stacked with the dielectric layers. Each internal electrode layer includes an inner layer and a first indium segregation layer. A material of the inner layer includes nickel. The first indium segregation layer is located between the inner layer and the adjacent dielectric layers. The first terminal electrode is disposed on the first end surface and electrically connected to a portion of the internal electrode layers. The second terminal electrode is disposed on the second end surface and electrically connected to the other portion of the internal electrode layers.

## Description

### BACKGROUND

### Field of Invention

The present disclosure relates to a technology for manufacturing a capacitor, and more particularly, to a multi-layer ceramic capacitor (MLCC).

### Description of Related Art

Multi-layer ceramic capacitors are a kind of ceramic capacitors, and capacitance of which is mainly proportional to a surface area of the product and a number of stacked ceramic films. The multi-layer ceramic capacitors can be directly mounted by a surface mount technology (SMT), and the multi-layer ceramic capacitors are easy to be formed into chips and have small volumes, such that the multi-layer ceramic capacitors have become a mainstream product in the capacitor industry and are applied in various electronic devices.

Perovskite oxide compounds as materials for dielectric layers of the multi-layer ceramic capacitor can reduce the cost of the multi-layer ceramic capacitor and enhance the performance of the multi-layer ceramic capacitor, such that the perovskite oxide compounds have been widely used in the multi-layer ceramic capacitors. However, as the number of stacked internal electrode layers in the multi-layer ceramic capacitor increases, the thickness of the dielectric layers is decreased, such that the insulation resistance between the internal electrode layers is reduced, which decreases the reliability and high temperature load life of the multi-layer ceramic capacitor.

Therefore, there is a need for a capacitor manufacturing technology that can overcome the defects of the conventional multi-layer ceramic capacitor.

### SUMMARY

Therefore, one objective of the present disclosure is to provide a multi-layer ceramic capacitor, in which each internal electrode layer includes a nickel inner layer and an indium segregation layer between the nickel inner layer and dielectric layers. The indium segregation layer can provide a Schottky barrier between the nickel inner layer and the dielectric layers, and the Schottky barrier can suppress leakage current. In addition, due to the addition of indium metal, a multi-layer ceramic brick can be sintered in a high reducing atmosphere, such that the multi-layer ceramic capacitor has stable reliability at higher operating temperatures, thereby increasing high temperature load life of the multi-layer ceramic capacitor and enhancing reliability of the multi-layer ceramic capacitor.

According to the aforementioned objectives, the present disclosure provides a multi-layer ceramic capacitor. The multi-layer ceramic capacitor includes a multi-layer ceramic brick, a first terminal electrode, and a second terminal electrode. The multi-layer ceramic brick has a first end surface and a second end surface that are opposite to each other. The multi-layer ceramic brick includes plural dielectric layers and plural internal electrode layers. The dielectric layers include plural perovskite oxides, and the perovskite oxides include barium and titanium. The internal electrode layers are alternately stacked with the dielectric layers. Each of the internal electrode layers includes an inner layer and a first indium segregation layer. A material of the inner layer includes nickel. The first indium segregation layer is located between the inner layer and the adjacent dielectric layers. The first terminal electrode is disposed on the first end surface and electrically connected to a portion of the internal electrode layers. The second terminal electrode is disposed on the second end surface and electrically connected to the other portion of the internal electrode layers.

According to one embodiment of the present disclosure, the first indium segregation layer includes indium, barium, and titanium.

According to one embodiment of the present disclosure, a thickness of the first indium segregation layer is ranging from 1 nm to 100 nm.

According to one embodiment of the present disclosure, the first indium segregation layer includes an aggregated metallic phase.

According to one embodiment of the present disclosure, the dielectric layers include plural second indium segregation layers respectively located at plural grain boundaries of the perovskite oxides.

According to the aforementioned objectives, the present disclosure further provides a multi-layer ceramic capacitor. The multi-layer ceramic capacitor includes a multi-layer ceramic brick, a first terminal electrode, and a second terminal electrode. The multi-layer ceramic brick has a first end surface and a second end surface that are opposite to each other. The multi-layer ceramic brick includes plural dielectric layers and plural internal electrode layers. The dielectric layers include plural perovskite oxides, and the perovskite oxides include barium and titanium. The dielectric layers include plural indium segregation layers respectively located at plural grain boundaries of the perovskite oxides. The internal electrode layers are alternately stacked with the dielectric layers. The first terminal electrode is disposed on the first end surface and electrically connected to a portion of the internal electrode layers. The second terminal electrode is disposed on the second end surface and electrically connected to the other portion of the internal electrode layers.

According to one embodiment of the present disclosure, a material of the internal electrode layers includes nickel.

According to one embodiment of the present disclosure, each of the internal electrode layers includes an inner layer and an aggregated metallic phase layer, the aggregated metallic phase layer is located between the inner layer and the adjacent dielectric layers, and the aggregated metallic phase layer includes indium.

According to one embodiment of the present disclosure, the aggregated metallic phase layer further includes barium and titanium.

According to one embodiment of the present disclosure, a thickness of the aggregated metallic phase layer is ranging from 1 nm to 100 nm.

### BRIEF DESCRIPTION OF THE DRAWINGS

Aspects of the present disclosure are best understood from the following detailed description in conjunction with the accompanying figures. It is noted that in accordance with the standard practice in the industry, various features are not drawn to scale. In fact, dimensions of the various features can be arbitrarily increased or reduced for clarity of discussion.
FIG. 1 is a schematic three-dimensional view of a multi-layer ceramic capacitor in accordance with an embodiment of the present disclosure.
FIG. 2 is a schematic cross-sectional view of the multi-layer ceramic capacitor taken along a section line A-A in FIG. 1.
FIG. 3 is a schematic cross-sectional view of the multi-layer ceramic capacitor taken along a section line B-B in FIG. 1.
FIG. 4 is an energy dispersive X-ray mapping (EDX mapping) of a portion of a multi-layer ceramic capacitor in accordance with an embodiment of the present disclosure.

### DETAILED DESCRIPTION

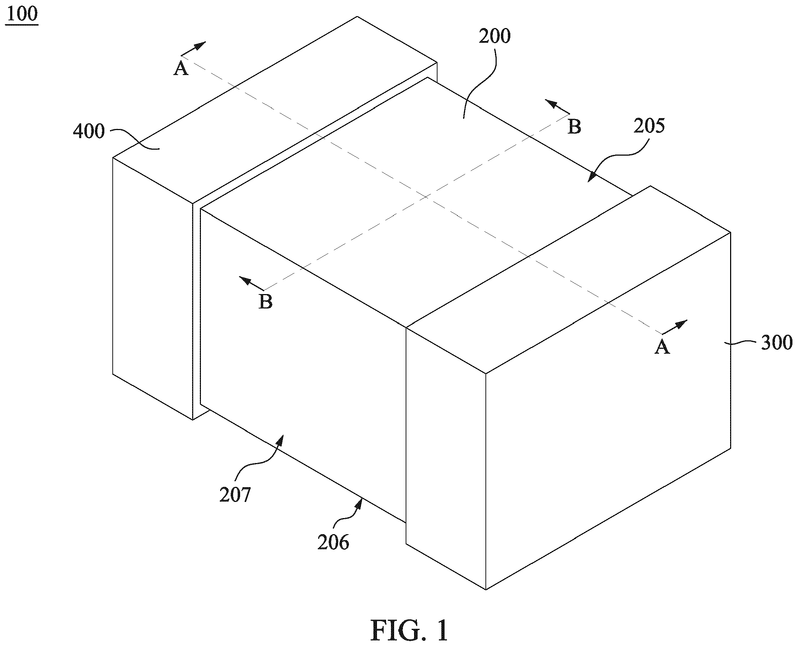

Referring to FIG. 1 to FIG. 3, FIG. 1 to FIG. 3 respectively illustrate a schematic three-dimensional view of a multi-layer ceramic capacitor 100 in accordance with an embodiment of the present disclosure, and schematic cross-sectional views of the multi-layer ceramic capacitor 100 taken along a section line A-A and a section line B-B in FIG. 1. The multi-layer ceramic capacitor 100 may mainly include a multi-layer ceramic brick 200, a first terminal electrode 300, and a second terminal electrode 400.

For example, the multi-layer ceramic brick 200 may be a cuboid or a cube. However, the shape of the multi-layer ceramic brick 200 can be designed according to product requirements, and the present disclosure is not limited thereto. The multi-layer ceramic brick 200 has a first end surface 202 and a second end surface 204 that are opposite to each other. In the example shown in FIG. 1 to FIG. 3, the multi-layer ceramic brick 200 is a cuboid, such that the multi-layer ceramic brick 200 further includes a first surface 205 and a second surface 206 that are opposite to each other, and a third surface207 and a fourth surface 208 that are opposite each other. The first end surface 202, the second end surface 204, the third surface 207, and the fourth surface 208 are all located between the first surface 205 and the second surface 206. The third surface 207 and the fourth surface 208 are located between the first end surface 202 and the second end surface 204.

The multi-layer ceramic brick 200 may mainly include plural dielectric layers 210 and plural internal electrode layers 220. The dielectric layers 210 and the internal electrode layers 220 are alternately stacked with each other. In the manufacturing of the multi-layer ceramic brick 200, green sheets of the dielectric layers 210 and slurry layers of the internal electrode layers 220 may be alternately stacked, and then the stacked structure may be sintered. The dielectric layers 210 are ceramic layers formed by sintering green sheets of perovskite oxide, such that each of the dielectric layer 210 includes many perovskite oxides. The perovskite oxides include barium and titanium. In some examples, the dielectric layers 210 made from barium titanate (BaTiOs) of the perovskite oxides.

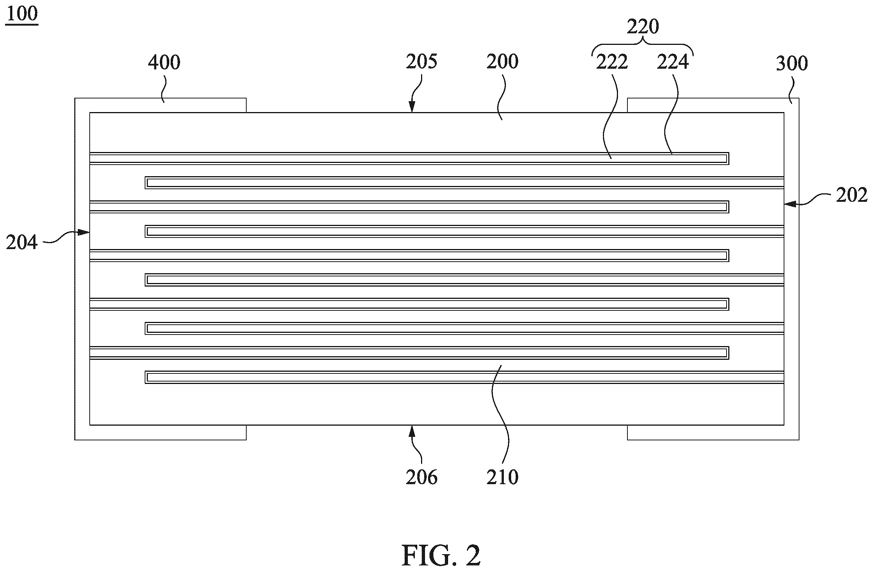

As shown in FIG. 2, the internal electrode layers 220 can be divided into two portions. One portion of the internal electrode layers 220 extend from the first end surface 202 of the multi-layer ceramic brick 200 toward the second end surface 204, and are spaced apart from the second end surface 204. The other portion of the internal electrode layers 220 extend from the second end surface 204 toward the first end surface 202, and are spaced apart from the first end surface 202. The two portions of the internal electrode layers 220 are alternately arranged, and the dielectric layers 210 are located between adjacent two of the internal electrode layers 220. The internal electrode layers 220 may be substantially parallel to the first surface 205 and the second surface 206 of the multi-layer ceramic brick 200.

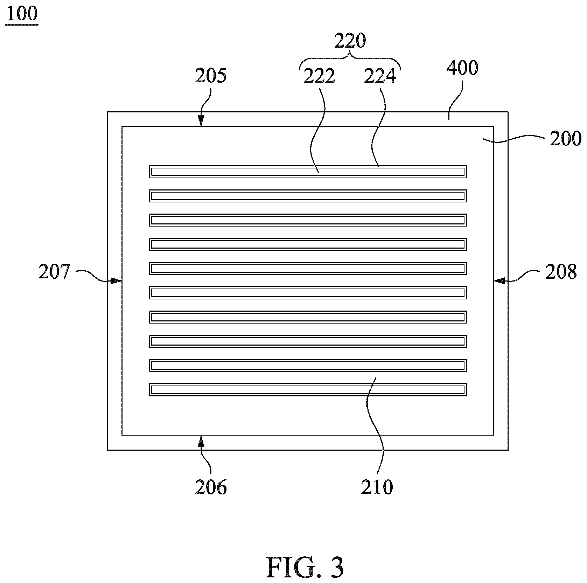

In the example shown in FIG. 2 and FIG. 3, each of the internal electrode layers 220 includes an inner layer 222 and a first indium segregation layer 224. A material of the inner layer 222 includes nickel. For example, nickel may be the major component of the inner layer 222. The first indium segregation layer 224 of each of the internal electrode layers 220 is located between the inner layer 222 and the dielectric layers 210 adjacent to the inner layer 222. Therefore, the first indium segregation layer 224 of each of the internal electrode layers 220 separates the inner layer 222 from the peripheral dielectric layers 210. In some examples, a thickness of the first indium segregation layer 224 is ranging from 1 nm to 100 nm.

In some examples, the internal electrode layers 220 are formed by sintering nickel paste added with indium. Therefore, the first indium segregation layer 224 may be an aggregated metallic phase layer of the indium metal between the inner layer 222 composed of nickel and the ceramic bodies of the dielectric layers 210. In the examples that the dielectric layers 210 are made from barium titanate, the first indium segregation layer 224 may include indium, barium, and titanium. In some exemplary examples, the nickel paste is added with 1.5 mol% indium.

Due to the addition of indium metal, the material of the internal electrode layers 220 can be sintered in a high reducing atmosphere. For example, the material of the internal electrode layers 220 may be sintered in an atmosphere with a high hydrogen content. As a result, the multi-layer ceramic capacitor 100 can have stable reliability at higher operating temperatures, such as 105°C and 125°C. In addition, the first indium segregation layer 224 can provide a Schottky barrier between the inner layer 222 and the dielectric layers 210, and the Schottky barrier can suppress the leakage current of the multi-layer ceramic capacitor 100. Therefore, the multi-layer ceramic capacitor 100 has a long load life at high temperatures and high reliability.

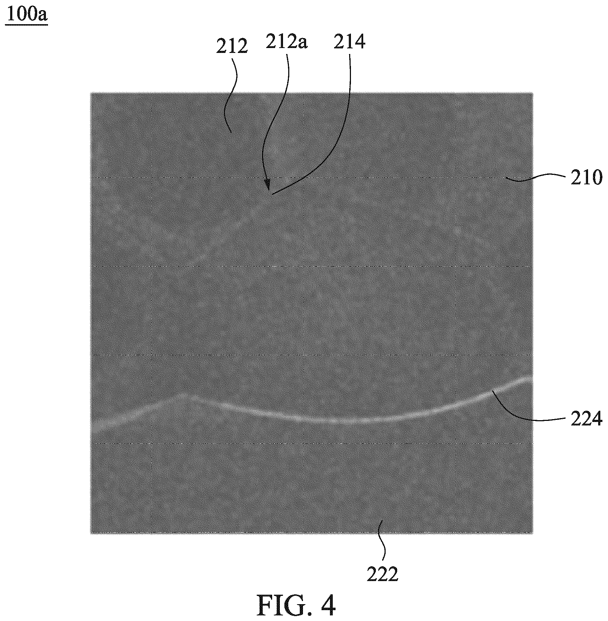

In some embodiments, indium segregation occurs not only at the interface between the inner layer 222 of the internal electrode layer 220 and the dielectric layers 210. Referring to FIG. 4, FIG. 4 is an energy dispersive X-ray mapping of a portion of a multi-layer ceramic capacitor 100a in accordance with an embodiment of the present disclosure. A structure of the multi-layer ceramic capacitor 100a is substantially the same as that of the multi-layer ceramic capacitor 100. The difference between the multi-layer ceramic capacitors 100a and 100 is that, in addition to the first indium segregation layers 224 of the internal electrode layers 220, the dielectric layers 210 of the multi-layer ceramic capacitor 100a include plural second indium segregation layers 214.

Specifically, the dielectric layer 210 includes plural perovskite oxides 212, and the second indium segregation layers 214 are respectively located at grain boundaries 212a of the perovskite oxides 212. That is, in the embodiment, the indium metal in the material of the internal electrode layer 220 not only segregates in the interface between the inner layer 222 and the dielectric layers 210, but also diffuses into the dielectric layers 210 and segregates in the grain boundaries 212a of the perovskite oxides 212 of the dielectric layers 210.

In other embodiments, the indium metal in the material of the internal electrode layer 220 is only segregated to the dielectric layers 210 and segregated in the grain boundaries 212a of the perovskite oxides 212 of the dielectric layers 210, so as to form indium segregation layers of metal aggregated phase at the grain boundaries 212a of the perovskite oxides 212 respectively.

The first terminal electrode 300 is at least disposed on the first end surface 202 of the multi-layer ceramic brick 200, and is electrically connected to the internal electrode layers 220 extending from the first end surface 202. The second terminal electrode 400 is at least disposed on the second end surface 204 of the multi-layer ceramic brick 200, and is electrically connected to the internal electrode layers 220 extending from the second end surface 204. In the example shown in FIG. 1 and FIG. 2, the first terminal electrode 300 covers the first end surface 202, and the first surface 205, the second surface 206, the third surface 207, and the fourth surface 208 that are adjacent to the first end surface 202. The second terminal electrode 400 covers the second end surface 204, and the first surface 205, the second surface 206, the third surface 207, and the fourth surface 208 that are adjacent to the second end surface 204.

Each of the first terminal electrode 300 and the second terminal electrode 400 may be a single-layer structure or a multi-layer structure. In some examples, each of the first terminal electrode 300 and the second terminal electrode 400 has a structure of three layers stacked sequentially, in which a material of the first layer may be copper, silver, or silver-palladium alloy, a material of the second layer may be nickel, and a material of the third layer may be tin.

According to the aforementioned embodiments, it can be known that one advantage of the present disclosure is that the internal electrode layer of the multi-layer ceramic capacitor includes the nickel inner layer and the indium segregation layer between the nickel inner layer and dielectric layers. The indium segregation layer can provide a Schottky barrier between the nickel inner layer and the dielectric layers, and the Schottky barrier can suppress the leakage current. In addition, due to the addition of indium metal, the multi-layer ceramic brick can be sintered in a high reducing atmosphere, such that the multi-layer ceramic capacitor has stable reliability at higher operating temperatures, thereby increasing high temperature load life of the multi-layer ceramic capacitor and enhancing reliability of the multi-layer ceramic capacitor.

## Claims

1. A multi-layer ceramic capacitor (100, 100a), comprising:
a multi-layer ceramic brick (200) having a first end surface (202) and a second end surface (204) that are opposite to each other, wherein the multi-layer ceramic brick (200) comprises:
a plurality of dielectric layers (210), wherein the dielectric layers (210) comprises a plurality of perovskite oxides (212), and the perovskite oxides (212) comprise barium and titanium; and
a plurality of internal electrode layers (220) alternately stacked with the dielectric layers (210), wherein each of the internal electrode layers (220) comprises:
an inner layer (222), wherein a material of the inner layer (222) comprises nickel; and
a first indium segregation layer (224) located between the inner layer (222) and the adjacent dielectric layers (210);
a first terminal electrode (300) disposed on the first end surface (202) and electrically connected to a portion of the internal electrode layers (220); and
a second terminal electrode (400) disposed on the second end surface (204) and electrically connected to the other portion of the internal electrode layers (220).

2. The multi-layer ceramic capacitor (100, 100a) of claim 1, wherein the first indium segregation layer (224) comprises indium, barium, and titanium.

3. The multi-layer ceramic capacitor (100, 100a) of claim 1 or 2, wherein a thickness of the first indium segregation layer (224) is ranging from 1 nm to 100 nm.

4. The multi-layer ceramic capacitor (100, 100a) of any of claims 1-3, wherein the first indium segregation layer (224) comprises an aggregated metallic phase.

5. The multi-layer ceramic capacitor (100, 100a) of any of claims 1-4, wherein the dielectric layers (210) comprise a plurality of second indium segregation layers (214) respectively located at a plurality of grain boundaries (212a) of the perovskite oxides (212).

6. A multi-layer ceramic capacitor (100, 100a), comprising:
a multi-layer ceramic brick (200) having a first end surface (202) and a second end surface (204) that are opposite to each other, wherein the multi-layer ceramic brick (200) comprises:
a plurality of dielectric layers (210), wherein the dielectric layers (210) comprises a plurality of perovskite oxides (212), the perovskite oxides (212) comprise barium and titanium, and the dielectric layers (210) comprise a plurality of indium segregation layers (214) respectively located at a plurality of grain boundaries (212a) of the perovskite oxides (212); and
a plurality of internal electrode layers (220) alternately stacked with the dielectric layers (210);
a first terminal electrode (300) disposed on the first end surface (202) and electrically connected to a portion of the internal electrode layers (220); and
a second terminal electrode (400) disposed on the second end surface (204) and electrically connected to the other portion of the internal electrode layers (220).

7. The multi-layer ceramic capacitor (100, 100a) of claim 6, wherein a material of the internal electrode layers comprises nickel.

8. The multi-layer ceramic capacitor (100, 100a) of claim 6 or 7, wherein each of the internal electrode layers (220) comprises an inner layer (222) and an aggregated metallic phase layer (224), the aggregated metallic phase layer (224) is located between the inner layer (222) and the adjacent dielectric layers (210), and the aggregated metallic phase layer (224) comprises indium.

9. The multi-layer ceramic capacitor (100, 100a) of claim 8, wherein the aggregated metallic phase layer further comprises barium and titanium.

10. The multi-layer ceramic capacitor (100, 100a) of claim 8 or 9, wherein a thickness of the aggregated metallic phase layer is ranging from 1 nm to 100 nm.
